# EUROPÄISCHE PATENTANMELDUNG

(11) **EP 1 982 871 A2**
(43) Veröffentlichungstag der Anmeldung: **22.10.2008**
(21) Anmeldenummer: 08001595.1
(22) Anmeldetag: 29.01.2008
(51) Int. Cl.: B60R 21/207, B60R 13/07, B62D 25/24

(54) **Abdeckeinrichtung für Wasserabläufe an Fenstern**

(30) Priorität: 17.04.2007 DE 102007018019
(71) Anmelder: HAPPICH Fahrzeug- und Industrieteile GmbH, 42285 Wuppertal (DE)
(72) Erfinder: Bednarz, Joachim, 42287 Wuppertal (DE); Memis, Yücel, 42103 Wuppertal (DE)

(57) **Zusammenfassung**

Die Erfindung bezieht sich auf eine Abdeckeinrichtung 10 für Wasserabläufe 11 an Fenstern 12, insbesondere Fahrzeugfenstern wie z. B. in Wohnmobilen, Wohnwagen, Verkaufsfahrzeugen etc., wobei die Wasserabläufe 11 an den Fensterrahmen 13 und/oder an den Fensterscheiben 14 in Form von Schlitzen, Bohrungen 15 oder dgl. angeordnet sind und von der Abdeckeinrichtung 10 abgedeckt werden, welche seitlich und/oder nach unten Ablauföffnungen 16 für eingetretenes Wasser aufweisen. Es ist dabei erfindungsgemäß vorgesehen, dass die Abdeckeinrichtung 10 Mittel 17 zur Erzeugung eines Unterdrucks zwecks Erhöhung der Durchflussmenge durch den jeweiligen Wasserablauf 11 aufweist.

## Beschreibung

Die Erfindung bezieht sich auf eine Abdeckeinrichtung für Wasserabläufe an Fenstern, insbesondere Fahrzeugfenstern wie z. B. in Wohnmobilen, Wohnwagen, Verkaufsfahrzeugen etc., wobei die Wasserabläufe an den Fensterrahmen und/oder an den Fensterscheiben in Form von Schlitzen, Bohrungen oder dgl. angeordnet sind und von der Abdeckeinrichtung abgedeckt werden, welche seitlich und/oder nach unten Ablauföffnungen für eingetretenes Wasser aufweisen.

Es ist bei Fahrzeugfenstern wie z. B. in Wohnmobilen, Wohnwagen, Verkaufswagen etc. häufig eine Abführung von Wasser aus dem Innenraum des jeweiligen Fahrzeugs nach außen erforderlich. Es sind dazu aus der Praxis verschiedene Wasserabläufe für derartige Fenster bekannt. Bei den bekannten Ausführungsformen sind in der Regel in den Fensterrahmen und teilweise auch in den Fensterscheiben Schlitze oder Bohrungen angebracht, durch die der jeweilige Wasserablauf gebildet werden soll. Diese Wasserabläufe werden dabei häufig mit Abdeckungen versehen. Diese Abdeckungen sind bei den bekannten Ausführungsformen seitlich oder auch seitlich und nach unten offen ausgebildet, damit eingetretenes Wasser durch die einwirkende Schwerkraft abfließen kann. Da diese Schlitze oder Bohrungen, die die genannten Wasserabläufe bilden, aus optischen Gründen möglichst klein ausfallen sollen, kommt es in der Praxis häufig zu Problemen bei der Wasserabführung.

Eine dahingehende Verbesserung der bekannten Abdeckeinrichtungen für Wasserabläufe an Fenstern ist deshalb wünschenswert.

Ausgehend von diesen bekannten Abdeckeinrichtungen für Wasserabläufe an Fenstern liegt der Erfindung die Aufgabe zu Grunde, die bekannten Anordnungen unter Beibehaltung der bisherigen Vorteile in der Weise zu verbessern bzw. weiter zu entwickeln, dass die zuvor erwähnten Nachteile der bekannten Ausführungsformen vermieden werden, wobei insbesondere eine Erhöhung der Durchflussmenge bei diesen Wasserabläufen an Fahrzeugfenstern erreicht werden soll. Es soll dabei die gewünschte Anordnung möglichst auch einen einfachen konstruktiven Aufbau mit wenigen Bauteilen aufweisen, sowie sicher und zuverlässig in den Funktionseigenschaften sein.

Die Aufgabe wird erfindungsgemäß dadurch gelöst, dass die Abdeckeinrichtung Mittel zur Erzeugung eines Unterdrucks zwecks Erhöhung der Durchflussmenge durch den jeweiligen Wasserablauf aufweist. Auf diese Weise wird erstmalig mit einfachen Mitteln eine Abdeckeinrichtung für Wasserabläufe an Fenstern geschaffen, bei der durch die Mittel zur Erzeugung eines Unterdrucks eine Erhöhung der Durchflussmenge durch den jeweiligen Wasserablauf insofern erreicht wird, als dass durch den Saugeffekt zusätzlich zur normalen Entwässerung bei aneinströmender Luft eine Zusatzentwässerung erfolgt. Die erfindungsgemäße Ausgestaltung ist dabei auch konstruktiv einfach aufgebaut und somit einfach und kostengünstig herstellbar, sowie im Weiteren sicher und zuverlässig in seinen Funktionseigenschaften.

Bei der bevorzugten Ausführungsform der vorliegenden Erfindung weist die Abdeckeinrichtung in Fahrtrichtung gesehen jeweils an den Endbereichen eine Öffnung auf. Dabei empfiehlt es sich, dass die in Fahrtrichtung gesehen vorne liegende Öffnung der Abdeckeinrichtung einen größeren Querschnitt als die in Fahrtrichtung hinten liegende Öffnung aufweist. Bei einer anderen Ausführungsform ist vorgesehen, dass die beiden Öffnungen der Abdeckeinrichtung einen gleich großen Querschnitt aufweisen.

Nach einem weiteren Merkmal der vorliegenden Erfindung ist vorgesehen, dass die Mittel zur Erzeugung eines Unterdrucks durch eine im mittleren Bereich der Abdeckeinrichtung angeordnete Querschnittsverengung gebildet sind. Auf diese Weise wird im Bereich der Querschnittsverengung bei auftreffendem Fahrtwind ein Unterdruck erzeugt ("Venturi"-Effekt). Dabei ist vorzugsweise vorgesehen, dass die Querschnittsverengung durch einen seitlich und/oder unten einen Schlitz aufweisenden, im Wesentlichen hohl ausgebildeten Zapfen gebildet ist. Bei einer derart ausgebildeten Abdeckeinrichtung wird bei auftretendem Fahrtwind im Bereich dieses Zapfens der Unterdruck erzeugt, wobei durch die im Wesentlichen hohl ausgebildete Ausgestaltung dieses Zapfens das Wasser beispielsweise aus dem Fensterrahmen abgesaugt werden kann.

Nach einem letzten Merkmal der vorliegenden Erfindung ist vorgesehen, dass die in Fahrtrichtung gesehen vorne liegende Öffnung der Abdeckeinrichtung trichterförmig ausgebildet ist. Mit diesen Mitteln kann in diesem Bereich noch eine zusätzliche Verstärkung des Unterdrucks erreicht werden.

Die Erfindung ist in den Figuren der Zeichnung in einem Ausführungsbeispiel dargestellt. Es zeigen:
- Fig. 1: eine schematische Seitenansicht der erfindungsgemäßen Abdeckeinrichtung für Wasserabläufe an Fenstern,
- Fig. 2: eine Vorderansicht der erfindungsgemäßen Abdeckeinrichtung gemäß der Fig. 1 mit schematisch angedeutetem auftreffenden Fahrtwind,
- Fig. 3: eine schematische Seitenansicht einer in einem Fensterrahmen eines Fensters eingebauten erfindungsgemäßen Abdeckeinrichtung.

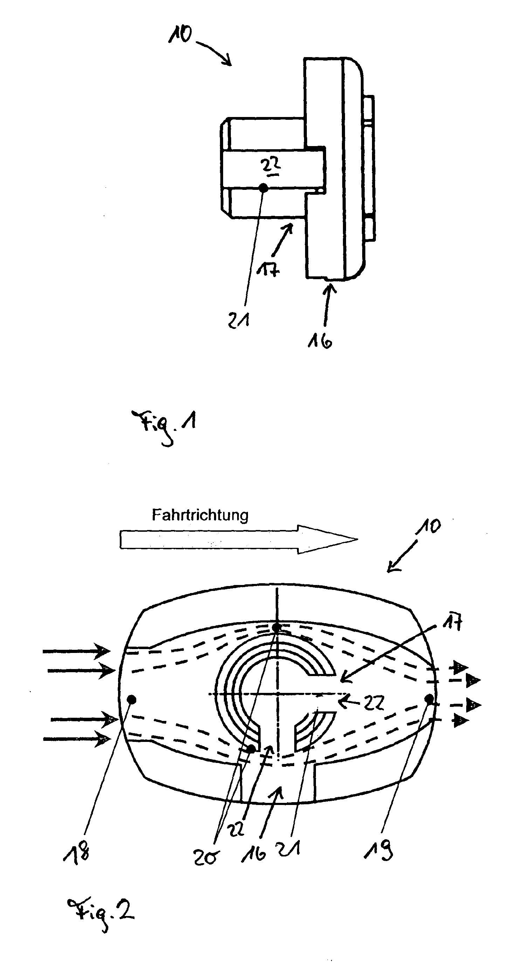

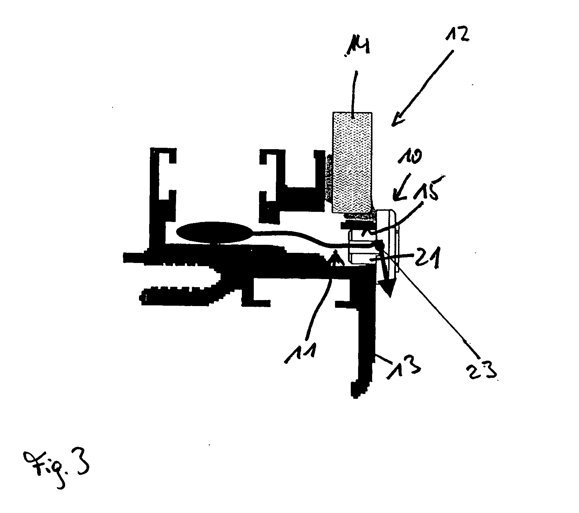

Die erfindungsgemäße Abdeckeinrichtung ist generell mit 10 bezeichnet und ist vorgesehen für Wasserabläufe 11 an Fenstern 12, insbesondere Fahrzeugfenstern wie z. B. in Wohnmobilen, Wohnwagen, Verkaufsfahrzeugen etc., siehe dazu insbesondere zunächst die Fig. 3 der Zeichnung mit einer in einem Fensterrahmen 13 eines Fensters 12 eingebauten erfindungsgemäßen Abdeckeinrichtung 10. In dem dargestellten Ausführungsbeispiel der erfindungsgemäßen Abdeckeinrichtung 10 ist also der Wasserablauf 11 an dem Fensterrahmen 13 eines Fensters 12 angeordnet, es ist aber auch möglich, einen derartigen Wasserablauf 11 beispielsweise an der Fensterscheibe 14 vorzusehen. Im dargestellten Ausführungsbeispiel ist der Wasserablauf 11 in Form einer Bohrung 15 in dem Fensterrahmen 13 ausgebildet, es ist aber auch möglich, einen Wasserablauf 11 in Form von Schlitzen oder andersartig vorzusehen. Der in der Fig. 3 der Zeichnung dargestellte Wasserablauf 11 an dem Fensterrahmen 13 wird nun von der erfindungsgemäßen Abdeckeinrichtung 10 abgedeckt, wobei diese Abdeckeinrichtung 10 seitlich und nach unten Ablauföffnungen 16 für eingetretenes Wasser aufweist, siehe dazu insbesondere die Fig. 2 sowie auch die Fig. 1 der Zeichnung.

Bei der erfindungsgemäßen Abdeckeinrichtung 10 ist nun vorgesehen, siehe dazu insbesondere die Fig. 2 der Zeichnung, dass diese Abdeckeinrichtung 10 Mittel 17 zur Erzeugung eines Unterdrucks zwecks Erhöhung der Durchflussmenge durch den jeweiligen Wasserablauf 11 aufweist. Durch diese Mittel 17 zur Erzeugung eines Unterdrucks wird bei der erfindungsgemäßen Abdeckeinrichtung 10 zusätzlich zu der normalen Entwässerung, diese ist in der Fig. 3 der Zeichnung mit 23 angedeutet, durch den bei anströmender Luft sich entwickelnden Saugeffekt eine Zusatzentwässerung erreicht. Die erfindungsgemäße Abdeckeinrichtung 10 ist dabei auch konstruktiv einfach aufgebaut und somit einfach und kostengünstig herstellbar, im Weiteren sicher und zuverlässig in ihren Funktionseigenschaften.

In konstruktiver Ausgestaltung weist die erfindungsgemäße Abdeckeinrichtung 10 in Fahrtrichtung gesehen jeweils an den Endbereichen eine Öffnung 18, 19 auf, siehe dazu wieder die Fig. 2 der Zeichnung. In diesem Fall weist die in Fahrtrichtung gesehen vorne liegende Öffnung 18 der Abdeckeinrichtung 10 einen größeren Querschnitt als die in Fahrtrichtung hinten liegende Öffnung 19 auf, es ist aber davon abweichend auch möglich, dass die beiden Öffnungen 18, 19 der Abdeckeinrichtung 10 einen gleichgroßen Querschnitt aufweisen.

Bei der erfindungsgemäßen Abdeckeinrichtung 10 ist weiterhin vorgesehen, siehe dazu wieder insbesondere die Fig. 2 der Zeichnung, dass die Mittel 17 zur Erzeugung eines Unterdrucks durch eine im mittleren Bereich der Abdeckeinrichtung 10 angeordnete Querschnittsverengung 20 gebildet sind. Bei dieser Ausgestaltung wird bei auftreffendem Fahrtwind im Bereich dieser Querschnittsverengung 20 ein Unterdruck erzeugt ("Venturi"-Effekt). Dabei ist bei den dargestellten Ausführungsformen vorgesehen, dass die Querschnittsverengung 20 durch einen seitlich und unten einen Schlitz 22 aufweisenden, im Wesentlichen hohl ausgebildeten Zapfen 21 gebildet ist, siehe dazu neben der Fig. 2 auch die Fig. 1 der Zeichnung. Durch diese Ausbildung eines im Wesentlichen hohl ausgebildeten Zapfens 21 kann auf diese Weise das Wasser aus dem Fensterrahmen 13 abgesaugt werden.

Bei der erfindungsgemäßen Abdeckeinrichtung 10 kann zur Verstärkung der Erzeugung eines Unterdrucks außerdem vorgesehen sein, dass die in Fahrtrichtung gesehen vorne liegende Öffnung 18 der Abdeckeinrichtung 10 trichterförmig ausgebildet ist, diese Ausführungsform ist in den Figuren der Zeichnung nicht dargestellt.

Bei der erfindungsgemäß ausgebildeten Abdeckeinrichtung 10 wird erstmalig durch die Mittel 17 zur Erzeugung eines Unterdrucks zwecks Erhöhung der Durchflussmenge durch den jeweiligen Wasserablauf 11 zusätzlich zu der normalen Entwässerung 23 bei anströmender Luft durch den sich entwickelnden Saugeffekt eine Zusatzentwässerung erreicht. Es können dadurch auch in dem Fall, wenn beispielsweise die Bohrung 15 aus optischen Gründen klein ausfallen sollte, Probleme bei der Wasserabführung vermieden werden.

Weitere in den Figuren, insbesondere der Fig. 3 der Zeichnung angedeutete Ausgestaltungsmerkmale der erfindungsgemäßen Anordnung, insbesondere der Einzelteile des Fensterrahmens 13, können einen an sich bekannten Aufbau aufweisen und sind deshalb in den Figuren der Zeichnung nicht separat dargestellt oder bezeichnet bzw. in der Beschreibung nicht separat beschrieben worden.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So sind insbesondere Abwandlungen in der konstruktiven Ausbildung der Mittel 17 zur Erzeugung eines Unterdrucks möglich, weiterhin vorgesehen ist selbstverständlich eine Ausbildung von andersartigen Abdeckeinrichtungen 10 für Wasserabläufe 11 an Fenstern 12, schließlich sei darauf hingewiesen, dass eine Anwendung bei unterschiedlichsten Arten von Fest- und Schiebefenstern vorgesehen ist.

### Bezugszeichenliste:

- 10: Abdeckeinrichtung
- 11: Wasserablauf
- 12: Fenster
- 13: Fensterrahmen
- 14: Fensterscheibe
- 15: Bohrung (in 13)
- 16: Ablauföffnung (in 10)
- 17: Mittel zur Erzeugung von Unterdruck (in 10)
- 18: Öffnung (von 10), oben
- 19: Öffnung (von 10), hinten
- 20: Querschnittsverengung (von 10)
- 21: Zapfen
- 22: Schlitz (von 21)
- 23: Normale Entwässerung

## Patentansprüche

1. Abdeckeinrichtung (10) für Wasserabläufe (11) an Fenstern (12), insbesondere Fahrzeugfenstern wie z. B. in Wohnmobilen, Wohnwagen, Verkaufsfahrzeugen etc., wobei die Wasserabläufe (11) an den Fensterrahmen (13) und/oder an den Fensterscheiben (14) in Form von Schlitzen, Bohrungen (15) oder dgl. angeordnet sind und von der Abdeckeinrichtung (10) abgedeckt werden, welche seitlich und/oder nach unten Ablauföffnungen (16) für eingetretenes Wasser aufweisen, **dadurch gekennzeichnet, dass** die Abdeckeinrichtung (10) Mittel (17) zur Erzeugung eines Unterdrucks zwecks Erhöhung der Durchflussmenge durch den jeweiligen Wasserablauf (11) aufweist.

2. Abdeckeinrichtung nach Anspruch 1, **dadurch gekennzeichnet, dass** die Abdeckeinrichtung (10) in Fahrtrichtung gesehen jeweils an den Endbereichen eine Öffnung (18), (19) aufweist.

3. Abdeckeinrichtung nach Anspruch 2, **dadurch gekennzeichnet, dass** die in Fahrtrichtung gesehen vorne liegende Öffnung (18) der Abdeckeinrichtung (10) einen größeren Querschnitt als die in Fahrtrichtung hinten liegende Öffnung (19) aufweist.

4. Abdeckeinrichtung nach Anspruch 2, **dadurch gekennzeichnet, dass** die beiden Öffnungen (18), (19) der Abdeckeinrichtung (10) einen gleich großen Querschnitt aufweisen.

5. Abdeckeinrichtung nach einem der Ansprüche 1 bis 4, **dadurch gekennzeichnet, dass** die Mittel (17) zur Erzeugung eines Unterdrucks durch eine im mittleren Bereich der Abdeckeinrichtung (10) angeordnete Querschnittsverengung (20) gebildet sind.

6. Abdeckeinrichtung nach Anspruch 5, **dadurch gekennzeichnet, dass** die Querschnittsverengung (20) durch einen seitlich und/oder unten einen Schlitz (22) aufweisenden, im Wesentlichen hohl ausgebildeten Zapfen (21) gebildet ist.

7. Abdeckeinrichtung nach einem der Ansprüche 2 bis 6, **dadurch gekennzeichnet, dass** die in Fahrtrichtung gesehen vorne liegende Öffnung (18) der Abdeckeinrichtung (10) trichterförmig ausgebildet ist.
